(19) Europäisches Patentamt
European Patent Office
Office européen des brevets

(11) Publication number: **0 321 002 A1**

(12) # EUROPEAN PATENT APPLICATION

(21) Application number: **88202187.6**

(22) Date of filing: **04.10.88**

(51) Int. Cl.⁴: **C08K 5/53 , C07F 9/38**

(30) Priority: **15.12.87 NL 8703025**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12151(US)**

(72) Inventor: **Claessen, Christianus Adrianus, Arnoldus**
**General Electrics Plastics B.V. P.O.Box 117**
**NL-4600 AC Bergen op Zoom(NL)**

(74) Representative: **Schüler, Horst, Dr. et al**
**General Electric Praunheimer Landstrasse 50**
**D-6000 Frankfurt 90(DE)**

(54) **Polymer composition having lithium salt of phosphonic acid, and lithium salt.**

(57) The invention relates to the lithium salt of the phosphonic acids of formula:

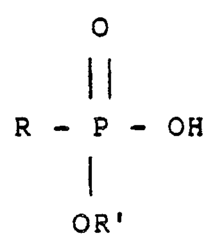

The invention also relates to the use of the said salts as flame retardants of polymer compositions.

EP 0 321 002 A1

## Polymer composition having lithium salt of phosphonic acid, and lithium salt.

The invention relates to a polymer composition having a metal salt of a phosphonic acid of formula I.

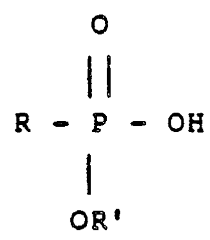

(I)

as a flame retardant, wherein
R is an alkyl group and
$R'$ is a hydrogen atom or an alkyl group.
The invention also relates to the lithium salt itself.

Such polymer mixtures are known from EP-A-0245207. The known polymer mixtures comprise a metal salt or a methalloid salt in which the metal or methalloid has been selected from the groups IIA, IIB, IIIA, IVA or VA of the Periodic Table of the Elements. According to this prior art, the salts of aluminium and of phosphonic acids, wherein R and $R'$ are a methyl group, are to be preferred. So aluminium methyl methyl phosphonate is preferred.

Aluminium methyl methyl phosphonate is indeed a good flame retardant for polymers. However, it has the following disadvantages:
- the notch impact strength of polymer compositions is deteriorated by the addition of aluminium methyl methyl phosphonate.
- the aluminium salt, when used in polymer compositions having a comparatively high processing temperature (of, for example, 300° C and higher), shows a tendency to foam formation.
- the aluminium salt, when incorporated in polymer compositions having a polyphenylene ether, leads to a considerably higher yellowing than the lithium salt.

The second above-mentioned disadvantage is likely associated with a beginning decomposition of the aluminium methyl methyl phosphonate at temperatures of 300° C. The result of this disadvantage is that the applicability of aluminium methyl methyl phosphonate is slightly restricted.

The invention is based on the discovery that phosphonic acid salts of lithium do not have the disadvantages mentioned hereinbefore.

The polymer composition according to the invention is characterised in that the metal salt is a lithium salt.

FR-A-2204658 describes blends of thermoplastic polyesters and alkali metal salts of phosphonic acids.

However sodium salts and potassium salts of phosphonic acids, in particular the sodium salt and the potassium salt of methyl methyl phosphonic acid, can in practice not be used as flame retardants as a result of their strong hygroscopic character; moreover, they show hardly any flame retarding properties.

The lithium salt according to the invention on the contrary has approximately the same flame retarding properties as the known aluminium salt; it is hardly hygroscopic. Polymer compositions which comprise the lithium salt do not show any or only a slight reduction of the notch impact value. The thermal stability is better than that of the corresponding aluminium salt.

The polymer mixture according to the invention preferably comprises a lithium salt of a phosphonic acid wherein R and $R'$ are an equal or different alkyl group having one, two, three, four, five or six carbon atoms. These alkyl groups may be straight or branched; they may be substituted, for example, with halogens or hydroxyl groups.

The polymer composition according to the invention may comprise 0.1-100 parts by weight of the lithium salt per 100 parts by weight of polymer or polymers. However, 0.5-40 parts by weight of the lithium salt are preferably used.

The lithium salt of the phosphonic acid of the formula I mentioned hereinbefore may in principle be used as a flame retardant for all polymers, thermoplastics and thermohardeners. In particular also for the polymers mentioned in EP-A-0 245 207.

More in particular the lithium salt may be used as a flame retardant for polyphenylene ethers, styrene

polymers, rubber-modified styrene polymers, aromatic polycarbonates, ABS-polymers, polyalkylene terephthalates, thermoplastic polyether ester copolymers, ASA-polymers, polyether imides, polyphenylene sulphides, polyamides, polyether sulphones, polyester carbonates, polyacrylates, polyurethanes.

Polymers, for example, mixtures of one or more of the polymers mentioned hereinbefore are also to be considered, for example, PPE-HIPS; PC-ABS; PC-PBT; PPE-PA mixtures.

When the polymer composition comprises polymers which are difficult to process, it is to be preferred to incorporate a plasticiser in the polymer composition. This may be of advantage, for example, in a polymer composition which comprises a polyphenylene ether.

In polymer compositions which comprise a polyphenylene ether, the plasticiser used may be, for example, an organic phosphate ester, for example, triaryl phosphate, an oligomeric ester, for example, oligomeric esters of phthalic acid and alkane diols, a higher hydrocarbon or a polysiloxane.

The polymer composition according to the invention may moreover comprise one or more additives conventionally used for polymer compositions, for example, fillers, reinforcing fibres, stabilisers, pigments and dyes, plasticisers, mould release agents, agent to improve the notch impact value. More in particular it is possible in the polymer composition according to the invention to use other flame retardants in combination with the lithium salt.

The invention also relates to the lithium salt itself.

The polymer compositions according to the invention can be obtained according to any conventional method. For example, by melt extrusion, by mixing solutions of the various constituents succeeded by evaporation of the solvents. The polymer compositions may be further processed according to the generally used methods as used for the polymers in question. For example, by injection moulding, extrusion blow moulding.

The lithium methyl methyl phosphonate as used in the examples hereinafter was prepared as follows: 945 g of dimethyl methyl phosphonate were mixed with 400 ml of water. While heating, 300 g of lithium hydroxide monohydrate dissolved in 1 litre of water were slowly added to the mixture. The methanol formed was evaporated. The resulting mixture was concentrated to a white solid by evaporation. A part of this substance was pulverised in a ball mill. This substance (lithium methyl methyl phosphonate) is not hygroscopic.

| Elementary analysis for: $C_2H_6LiO_3P$ | | | | |
|---|---|---|---|---|
| | C | H | Li | P |
| Calculated | 20.71% | 5.21% | 5.98% | 26.71% |
| Found | 20.68% | 5.18% | 6.04% | 26.83% |

The decomposition determined according to TGA (thermogravimetric analysis) ($N_2$-atmosphere, heating rate 25° C/min) begins at 340° C.

In the comparative examples, aluminium methyl methyl phosphonate as known from EP-A-0 245 207 was used (beginning decomposition temperature: 300° C). A comparative example using sodium methyl methyl phosphonate was also carried out. This sodium salt was prepared in a manner corresponding to that described hereinbefore for the lithium salt. The sodium salt was particularly difficult to process due to its very hygroscopic nature.

Comparative examples A through D, examples I through IX

Various polymer compositions were prepared starting from the following constituents:

| | | |
|---|---|---|
| PPE | : | poly(2,6-dimethyl-1,4-phenylene) ether having an intrinsic viscosity of 0.46 dl/g measured in $CHCl_3$ at 25° C |
| HIPS | : | a high-impact polystyrene having a content of rubber-like phase of approximately 20% by weight |
| PTFE | : | poly(tetrafluoroethylene) |
| TPP1 | : | triphenylphosphate |
| TPP2 | : | isopropylated TPP |
| Oligomeric ester | : | an oligomeric ester of phthalic acid and alkane diols |
| Silicon oil | : | a liquid polysiloxane compound |
| Mineral oil | : | a mixture of higher hydrocarbons |
| AMMP | : | aluminium methyl methyl phosphonate |
| SMMP | : | sodium methyl methyl phosphonate |
| LMMP1 | : | lithium methyl methyl phosphonate, finely ground |
| LMMP2 | : | lithium methyl methyl phosphonate, not finely ground. |

The constituents mentioned hereinbefore were always compounded in a blade extruder in the quantities recorded in the table hereinafter. The same extrusion conditions (melting temperature, number of blade revolutions per minute) were always used for polymer mixtures having the same weight ratio polyphenylene ether to high-impact polystyrene.

The strands emanating from the extruder were evaluated visually to determine the foam formation. The strands were pelleted. Suitable test pieces were injection moulded from the resulting pellets to determine the notch impact value according to Izod, to determine the flammability properties accrding to UL-94, and to determine the yellowness index according to ASTM E313.

The results obtained are also recorded in the table hereinafter.

| EXAMPLE | | | | | | | | | | | | | | |
|---|---|---|---|---|---|---|---|---|---|---|---|---|---|---|
| Composition (parts by weight) | A | B | C | I | II | III | IV | V | VI | VII | D | VIII | E | IX |
| PPE | 35 | 35 | 35 | 35 | 35 | 25 | 25 | 25 | 25 | 25 | 45 | 45 | 60 | 60 |
| HIPS | 65 | 65 | 65 | 65 | 65 | 75 | 75 | 75 | 75 | 75 | 55 | 55 | 40 | 40 |
| PTFE | 0.05 | 0.05 | | 0.05 | 0.05 | 0.05 | 0.05 | 0.05 | 0.05 | 0.05 | | | | |
| TPP | 10 | | | | | 5 | | | | | | | | |
| Reofos 350 | | | | | | | 5 | | | | | | | |
| Oligomeric ester | | | | | | | | 5 | | | | | | |
| Silicon oil | | | | | | | | | 5 | | | | | |
| Mineral oil | | | | | | | | | | 5 | | | | |
| AMMP | | 10 | | | | | | | | | 5 | | 5 | |
| SMMP | | | 10 | | | | | | | | | | | |
| LMMP1 | | | | 10 | | 7,5 | 7.5 | 7.5 | 7.5 | 7.5 | | 5 | | 5 |
| LMMP2 | | | | | 10 | | | | | | | | | |
| Test results: | | | | | | | | | | | | | | |
| Notch impact value J/m | 230 | 90 | 75 | 205 | 230 | 210 | 205 | 195 | 200 | 240 | 85 | 195 | 70 | 190 |
| Classification according to 1.6mm | V1 | V1 | HB** | V1 | V1 | V1 | V2 | V2 | V2 | V2 | V1 | V1 | V1 | V1 |
| UL-94: 3.2mm | V1 | V0 | HB | V0 | V0 | V0 | V1 | V1 | V1 | V1 | V0 | V0 | V0 | V0 |
| Foam formation* | - | 0 | - | - | - | - | - | - | - | - | + | - | + | - |
| Yellowness index | | | | | | | | | | | 40 | 36 | 44 | 38 |

* - substantially none
0 some foam formation
+ serious foam formation
** HB means sample burns
No classification possible

The following may be derived from the results of the above table :

1. SMMP shows no flame-retarding properties (comparative example C).

2. The known AMMP shows approximately the same flame-retarding properties as LMMP (comparative example B vs examples I and II).

3. The addition of AMMP and of SMMP leads to a reduction of the notch impact value (comparative example A vs comparative examples B and C).

4. The addition of LMMP does not lead or leads hardly to a reduction of the notch impact value (examples I through IX vs comparative example A).

5. The addition of LMMP leads to a smaller yellowing and less foam formation than in the addition of AMMP.

## Claims

1. A polymer composition having a metal salt of a phosphonic acid of formula I

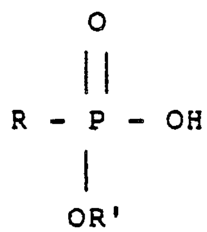

(I)

as a flame retardant, wherein
R is an alkyl group and
$R'$ is a hydrogen atom or an alkyl group,
characterised in that the metal salt is a lithium salt.

2. A polymer composition as claimed in Claim 1, characterised in that R and $R'$ are an equal or different alkyl group having one, two, three, four, five or six carbon atoms.

3. A polymer composition as claimed in Claim 1, characterised in that R and/or $R'$ are/is a substituted alkyl group.

4. A polymer composition as claimed in Claim 1, characterised in that the polymer composition comprises one or more of the following thermoplastic polymers: polyphenylene ethers, styrene polymers, rubber-modified styrene polymers, aromatic polycarbonates, ABS-polymers, polyalkylene terephthalates, thermoplastic polyether ester copolymers, ASA-polymers, polyether imides, polyphenylene sulphides, polyamides, polyether sulphones, polyester carbonates, polyarylates, polyurethanes.

5. A polymer composition as claimed in Claim 1, characterised in that the polymer composition comprises the metal salt in a quantity from 0.5 to 40 parts by weight per 100 parts by weight of polymer or polymers.

6. A polymer composition as claimed in Claim 1, characterised in that the polymer composition comprises a polyphenylene ether, a plasticiser for polyphenylene ethers and the metal salt.

7. A polymer composition as claimed in Claim 6, characterised in that the polymer composition comprises an organic phosphate ester, an oligomeric ester, a higher hydrocarbon, or a polysiloxane as a plasticiser.

8. A polymer composition as claimed in Claim 1, characterised in that the polymer composition comprises one or more additive conventionally used for polymeric compositions.

9. A lithium salt of the phosphonic acid of formula I

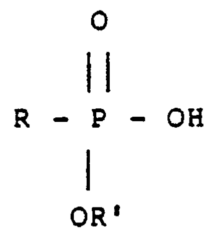

wherein
R is an alkyl group and
R′ is a hydrogen atom or an alkyl group.

10. Lithium methyl methyl phosphonate.

European Patent Office

# EUROPEAN SEARCH REPORT

Application Number

EP 88 20 2187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | EP-A-0 245 207 (CIBA-GEIGY AG)<br>* Claims *<br>--- | 1 | C 08 K 5/53<br>C 07 F 9/38 |
| X,D | FR-A-2 204 658 (FARBWERKE HOECHST AG)<br>* Claims; page 6, examples 2-3 *<br>----- | 1-5 | |
| | | | **TECHNICAL FIELDS SEARCHED (Int. Cl.4)** |
| | | | C 07 F<br>C 08 K<br>C 08 L |

The present search report has been drawn up for all claims

| Place of search | Date of completion of the search | Examiner |
|---|---|---|
| THE HAGUE | 17-03-1989 | HOFFMANN K.W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)